# EUROPÄISCHE PATENTSCHRIFT

(11) **EP 2 377 709 B1**
(45) Veröffentlichungstag und Bekanntmachung des Hinweises auf die Patenterteilung: **28.09.2016**
(21) Anmeldenummer: 11162354.2
(22) Anmeldetag: 14.04.2011
(51) Int. Cl.: B60J 7/12

(54) **Verdeck mit einem Verdeckbezug und einem Stoffhaltebügel**
Covering with a soft top and a retaining bracket
Recouvrement doté d'un capote souple et d'un étrier de retenue

(30) Priorität: 14.04.2010 DE 102010014896
(43) Veröffentlichungstag der Anmeldung: 19.10.2011
(73) Patentinhaber: Valmet Automotive Oy, 23500 Uusikaupunki (FI)
(72) Erfinder: Buchberger, Ingo, 49170 Hagen (DE)
(74) Vertreter: Kronthaler, Wolfgang N.K.

(56) Entgegenhaltungen:
- EP-A1- 2 067 643
- EP-A2- 2 210 754
- DE-B3-102006 036 658

## Beschreibung

Die Erfindung betrifft ein Verdeck für ein Cabriolet-Fahrzeug mit einem Verdeckbezug und einem Stoffhaltebügel nach der im Oberbegriff des Patentanspruchs 1 näher definierten Art.

Bei aus der Praxis bekannten Cabriolet-Fahrzeugen mit einem Soft-Top-Verdeck ist ein Verdeckbezug des Verdecks in einem heckseitigen Bereich entweder an einem Spannbügel des Verdecks oder karosseriefest festgelegt, um bei geschlossenem Verdeck eine gespannte Stellung des Verdeckbezugs herstellen zu können.

Zur Anordnung des Verdeckbezugs an einen bei einer Öffnungs- bzw. Schließbewegung des Verdecks bewegbaren Spannbügel ist es bekannt, dass der Verdeckbezug durch eine Umschlingung des Spannbügels an diesem festgelegt wird. Dabei wird ein Endbereich des Verdeckbezugs nach Umschlingung des Spannbügels an dem Verdeckbezug angenäht, so dass der Verdeckbezug irreversibel eine Tasche bildend an dem Spannbügel angeordnet ist.

Aus der DE 10 2007 029 704 A1 ist ein Verdeck eines Cabriolet-Fahrzeuge bekannt, bei welchem der Verdeckbezug an einer Befestigungseinrichtung flexibel festlegbar ist. Der Verdeckbezug ist dabei in einem Endbereich mit einer Kunststoffleiste verbunden, welche in ein U-Profil der Befestigungseinrichtung eingesteckt ist. Um zu verhindern, dass sich die Kunststoffleiste insbesondere bei nicht geschlossenem Verdeck und nicht unter Spannung stehendem Verdeckbezug aus dem U-Profil herausbewegt, sind mehrere, entlang der Erstreckung der Kunststoffleiste verteilte Schraubverbindungen vorgesehen.

Die Festlegung des Verdeckbezugs bei der Montage des Verdecks gestaltet sich dabei insbesondere unter Berücksichtigung der üblicherweise engen Bauraumverhältnisse als schwierig und sehr zeitaufwändig.

Eine ähnliche Ausführung, bei der eine Kunststoffleiste in einer schlitzartigen Ausführung eines Spannbügels angeordnet ist, ist aus der EP 2 067 643 A1 bekannt.

Ferner ist aus der nachveröffentlichten EP 2 210 754 A2 ein Faltverdeck bekannt, bei dem ein in einem Endbereich an einem Spannseil angeordneter Verdeckbezug in einem mittigen Bereich des Spannbügels aus einer hierfür vorgesehenen nutförmigen Aufnahme zur Reduzierung einer Spannung des Verdeckbezugs während eines Öffnungs- bzw. Schließvorgangs des Verdecks herausgleiten kann.

Es ist Aufgabe der vorliegenden Erfindung, ein Verdeck für ein Cabriolet-Fahrzeug mit einem Verdeckbezug und einem Stoffhaltebügel zu schaffen, bei dem der Verdeckbezug auf einfache und schnelle Weise auch an einem karosseriefesten Stoffhaltebügel festlegbar ist.

Diese Aufgabe wird mit einem Verdeck für ein Cabriolet-Fahrzeug mit einem Verdeckbezug und einem Stoffhaltebügel nach den Merkmalen des Patentanspruches 1 gelöst.

Vorteilhafte Weiterbildungen eines Verdecks nach der Erfindung ergeben sich aus den Unteransprüchen.

Die Erfindung sieht ein Verdeck für ein Cabriolet-Fahrzeug mit einem Verdeckbezug und einem Stoffhaltebügel vor, wobei ein Endbereich des Verdeckbezugs mit einem Verstärkungselement verbunden ist und zusammen mit diesem quer zur Erstreckungsrichtung des Stoffhaltebügels in ein Profil des Stoffhaltebügels eingesteckt ist, wobei das Profil des Stoffhaltebügels mit einer in Erstreckungsrichtung des Stoffhaltebügels verlaufenden Öffnung ausgebildet ist, durch welche der Verdeckbezug mit dem Verstärkungselement lose, d. h. nicht fixiert, eingesteckt ist, und wobei das Verstärkungselement als Leiste ausgebildet ist, an welche der Verdeckbezug in einem Endbereich angebunden ist. Erfindungsgemäß ist vorgesehen, dass das Profil des Stoffhaltebügels als C-Profil mit einem ersten U-förmigen Bereich und einem zweiten U-förmigen Bereich ausgebildet ist, wobei die Geometrie des C-Profils und der Leiste derart aufeinander abgestimmt sind, dass die Leiste mit einem Ende in einen U-förmigen Bereich des C-Profils des Stoffhaltebügels einsteckbar und mit dem anderen Ende durch die Öffnung in das C-Profil des Stoffhaltebügels einschwenkbar ist.

Der Verdeckbezug ist mithin mit der Leiste in Gebrauchszustand des Verdecks, d. h. bei an einem Cabriolet-Fahrzeug angeordneten und sich dabei in einer offenen oder geschlossenen Position befindlichem Verdeck, lose in dem C-Profil eingesteckt.

Unabhängig von der Anordnung des Stoffhaltebügels wird der Stoffhaltebügel vorliegend als Teil des Verdecks betrachtet.

Bei einem erfindungsgemäßen Verdeck ist eine Anordnung des Verdeckbezugs an dem Stoffhaltebügel auf einfache und schnelle Weise möglich. Der Verdeckbezug kann lediglich durch das Einstecken des Verstärkungselements in das C-Profil an diesem festgelegt werden.

Eine erfindungsgemäße Anbindung des Verdeckbezugs an den Stoffhaltebügel benötigt zudem einen vorteilhafterweise geringen Bauraum und ist mit wenigen Bauteilen realisierbar. Zur Montage des Verdeckbezugs an den Stoffhaltebügel müssen der Stoffhaltebügel und der Verdeckbezug relativ zueinander lediglich im Wesentlichen quer zur Erstreckungsrichtung des Stoffhaltebügels bewegt werden. Der Verdeckbezug muss vorteilhafterweise nicht zeitaufwändig in Erstreckungsrichtung des Stoffhaltebügels in diesen "eingefädelt" werden.

Die Montage des Verdeckbezugs an den Stoffhaltebügel ist hierdurch unabhängig von anderen Montagevorgängen des Verdecks oder Cabriolet-Fahrzeugs und kann unabhängig vom Zeitpunkt der Montage des Verdeckbezugs und des Stoffhaltebügels zu jedem Zeitpunkt durchgeführt werden. Die Montage ist hierdurch sehr flexibel und dadurch auch kostengünstig möglich.

Die Anordnung des Verdeckbezugs an dem Stoffhaltebügel ist zudem reversibel, so dass der Verdeckbezug sehr einfach demontiert bzw. ausgetauscht werden kann. Hierdurch kann beispielsweise ein heckseitiger Raum eines Cabriolet-Fahrzeugs leichter zugänglich gemacht werden, wobei dies insbesondere bei Cabriolet-Fahrzeugen mit einem Heckmotor vorteilhaft sein kann.

Der Stoffhaltebügel bzw. die Stoffhalteschiene können einteilig, aber auch mehrteilig, beispielsweise mit mehreren aneinander gereihten Schienen, welche sowohl geradlinig als auch gebogen ausgebildet sein können, ausgebildet sein.

Sowohl eine Anbindung des Verdeckbezugs an das Verstärkungselement als auch ein Einstecken des Verstärkungselements in die Öffnung des C-Profils kann bei der erfindungsgemäßen Lösung auf einfache Weise umgesetzt werden.

Durch entsprechende Wahl der geometrischen Rahmenbedingungen kann sichergestellt werden, dass das sich in dem C-Profil befindliche Verstärkungselement zusammen mit dem Verdeckbezug dort sicher gehalten wird.

Besonders einfach und schnell ist der Verdeckbezug an dem Stoffhaltebügel anordenbar, wenn die Öffnung des Stoffhaltebügels in Verdeckfrontrichtung weist, so dass sich der Verdeckbezug ausgehend von der Öffnung des C-Profils in geschlossener Verdeckposition in Verdeckfrontrichtung erstreckt. Die Anbindungsstelle des Verdeckbezugs an den Stoffhaltebügel ist dabei besonders einfach zugänglich, so dass dieser auf einfache Weise an dem Stoffhaltebügel angeordnet und von diesem entfernt werden kann.

Alternativ hierzu kann es auch vorgesehen sein, dass die Öffnung des C-Profils in Verdeckheckrichtung weist und der Verdeckbezug sich ausgehend von seinem mit dem Verstärkungselement in dem C-Profil befindlichen Ende zunächst in Verdeckheckrichtung erstreckt und nach zumindest teilweiser Umschlingung des C-Profils von der Öffnung nach oben oder nach unten in Verdeckfrontrichtung verläuft.

Durch entsprechende Wahl der geometrischen Rahmenbedingungen kann sichergestellt werden, dass das sich in dem C-Profil befindliche Verstärkungselement zusammen mit dem Verdeckbezug dort sicher gehalten wird.

Um ein Einstecken des Verstärkungselements besonders einfach zu gestalten, kann das Verstärkungselement aus einem flexiblen Material, beispielsweise aus Kunststoff, ausgebildet sein, so dass es insbesondere in gebogener bzw. gespannter Form in das C-Profil einführbar ist.

Um ein Herausgleiten des Verstärkungselements aus dem C-Profil insbesondere bei unter Spannung stehendem Verdeckbezug auf besonders sichere Weise zu verhindern, kann ein Sicherungsprofil beispielsweise in Form einer Sicherungsschiene vorgesehen sein, welches in einen U-förmigen Bereich des C-Profil insbesondere in Erstreckungsrichtung des Stoffhaltebügels derart einschiebbar ist, dass die Leiste gegen den anderen U-förmigen Bereich des C-Profils gedrückt und entgegen einer Bewegung durch die Öffnung festgelegt ist.

Besonders vorteilhaft ist es dabei, wenn das Sicherungsprofil in einen im Bereich des unteren U-förmigen Bereichs des C-Profils vorliegenden Hohlraum einschiebbar ist und die Leiste entgegen einer Bewegung in diese Richtung gesichert ist. Die Leiste ist hierbei mit einem oberen Ende in dem oberen U-förmigen Bereich und mit einem unteren Ende in dem unteren U-förmigen Bereich angeordnet und kann somit bei auf sie wirkender Kraft nicht aus der Öffnung des C-Profils gezogen werden.

Durch entsprechende Ausgestaltung des C-Profils, des Verstärkungselements und des Sicherheitsprofils kann das Verstärkungselement sehr einfach und schnell aus dem C-Profil entfernt und in dieses eingesteckt werden. Das Sicherungsprofil kann dabei beginnend an einem Endbereich des C-Profil in dieses eingeführt oder durch eine beispielsweise durch eine in einem verdeckmittigen Bereich des C-Profils vorgesehene Öffnung in das C-Profil eingeführt werden.

Weiterhin kann das Sicherungsprofil auch mehrteilig ausgebildet sein, wobei die einzelnen Teile des Sicherungsprofils in verschiedenen Bereichen des C-Profils in dieses einsteckbar sein können.

Zudem kann wenigstens eine Arretiereinrichtung vorgesehen sein, mittels welcher das Sicherungsprofil oder Teile des Sicherungsprofils in dem C-Profil festlegbar sind.

Das Sicherungsprofil kann in einer Weiterbildung der Erfindung integral mit dem Verstärkungselement ausgebildet sein, wobei insbesondere vorgesehen sein kann, dass ein das Sicherungsprofil bildender Teil einer Schiene aus einem weicheren Material als ein das Verstärkungselement bildender Teil einer Schiene ausgebildet ist, um in das C-Profil durch dessen in Längsrichtung laufende, schlitzartige Öffnung eingeführt werden zu können.

Das C-Profil des Stoffhaltebügels kann bei einer vorteilhaften Ausgestaltung der Erfindung fest an einer Fahrzeugkarosserie festlegbar, beispielsweise anschraubbar oder anschweißbar, sein. Das ist insbesondere bei einem C-Profil mit einer sich in Verdeckfrontrichtung erstreckenden Öffnung vorteilhaft, weil der Stoffhaltebügel in diesem Fall zusammen mit einer Fahrzeugkarosserie gefertigt werden kann und der Verdeckbezug mit dem Verstärkungselement erst später bei einer Montage des Verdecks an die Fahrzeugkarosserie in das C-Profil des Stoffhaltebügels eingesteckt werden kann.

Alternativ hierzu kann der Stoffhaltebügel fest an einem bei einer Verdecköffnungsbewegung bzw. einer Verdeckschließbewegung beweglichen Spannbügel des Verdecks angeordnet sein. Der Stoffhaltebügel kann dabei auch integral mit dem Spannbügel ausgebildet sein. Somit wird auch bei einer derartigen Anordnung bzw. Ausbildung des Stoffhaltebügels eine einfache und schnelle Montierbarkeit des Verdeckbezugs an den Stoffhaltebügel gewährleistet.

Eine optisch ansprechende Ausbildung eines erfindungsgemäßen Verdecks kann dadurch erreicht werden, dass der Stoffhaltebügel zumindest bei sich in geschlossener Position befindlichem Verdeck in Einbausituation unterhalb einer Karosserieaußenhautkante an der Fahrzeugkarosserie festgelegt ist und somit von außen nicht sichtbar ist.

Um ein Eindringen von Flüssigkeit, Schmutz oder dergleichen in einen Fahrzeuginnenraum wirksam zu verhindern, kann ein Dichtprofil vorgesehen sein, mittels welchem der Verdeckbezug bei sich in seiner geschlossenen Position befindlichem Verdeck dichtend zusammenwirkt. Das Dichtprofil kann insbesondere, wenn der Stoffhaltebügel an dem Spannbügel angeordnet oder integral mit diesem ausgebildet ist, an dem Stoffhaltebügel angeordnet und beispielsweise an diesen ansteckbar sein. Bei einem an der Fahrzeugkarosserie festlegbaren Stoffhaltebügel kann das Dichtprofil an der Fahrzeugkarosserie anordenbar sein.

Zur Ausbildung von flexiblen und einfach handhabbaren Elementen ist es vorteilhaft, wenn das Verstärkungselement und/oder das Sicherungsprofil mit Kunststoff ausgebildet sind.

Der Verdeckbezug kann in einer einfachen Ausgestaltung der Erfindung an dem Verstärkungselement angenäht oder angeklebt sein.

Weitere Vorteile und vorteilhafte Ausführungen eines Verdecks für ein Cabriolet-Fahrzeug nach der Erfindung ergeben sich aus der Zeichnung und der Beschreibung.

Nachfolgend ist ein vorteilhaftes Ausführungsbeispiel eines erfindungsgemäßen Verdecks anhand der Zeichnung prinzipmäßig beschrieben.

Es zeigt:
- Fig. 1: eine vereinfachte dreidimensionale Ansicht eines Cabriolet-Fahrzeugs mit einem Soft-Top-Verdeck, wobei das Soft-Top-Verdeck in einer einen Fahrgastraum überspannenden, geschlossenen Position gezeigt ist;
- Fig. 2: eine vereinfachte dreidimensionale geschnittene Darstellung eines heckseitigen Ausschnitts des Cabriolet-Fahrzeugs der Fig. 1, wobei ein Verdeckbezug des Verdecks an einem Stoffhaltebügel des Verdecks angeordnet ist;
- Fig. 3: eine vereinfachte dreidimensionale Darstellung des Stoffhaltebügels mit daran angeordnetem Verdeckbezug in Alleinstellung.

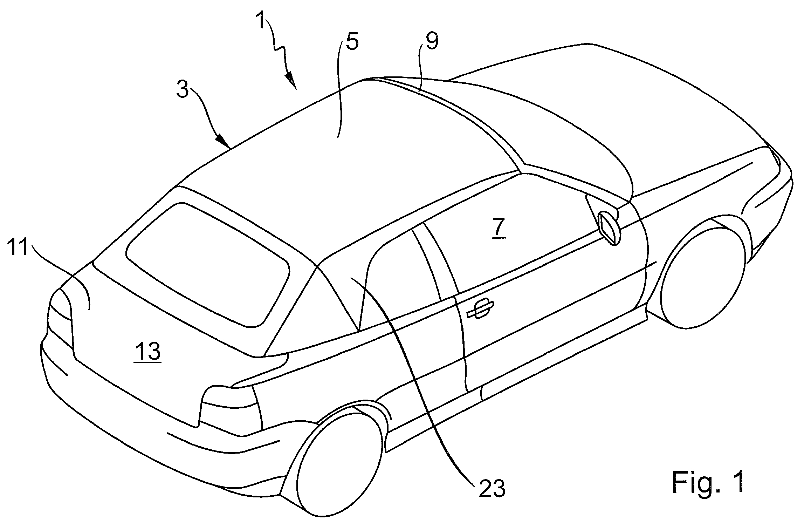

In Fig. 1 ist ein Cabriolet-Fahrzeug 1 mit einem als Soft-Top ausgebildeten Verdeck 3 gezeigt, wobei das einen flexiblen Verdeckbezug 5 aufweisende Verdeck 3 in einer einen Fahrgastraum 7 überspannenden Position gezeigt ist, in welcher das Verdeck 3 sich von einem Windschutzscheibenrahmen 9 fahrzeugheckwärts bis zu einem Heckdeckel 11 erstreckt.

Das Verdeck 3 kann ausgehend von der gezeigten geschlossenen Position in eine den Fahrgastraum 7 freigebende, in einem heckseitigen Ablagebereich 13 angeordnete Position verfahren werden. Der heckseitige Ablagebereich ist vorliegend als ein heckseitiger Stauraum 13 ausgebildet, welcher durch die als Heckdeckel 11 ausgebildete Deckeleinrichtung abschließbar ist.

Zur Überführung des Verdecks 3 zwischen seiner geschlossenen und seiner offenen Position ist eine nicht näher dargestellte Antriebseinrichtung vorgesehen, welche hierzu mit einer als Verdeckgestänge ausgebildeten Verdeckkinematik zusammenwirkt. In den flexiblen Verdeckbezug 5 ist eine starre Heckscheibe 17 eingebunden, welche an das Verdeckgestänge angebunden ist.

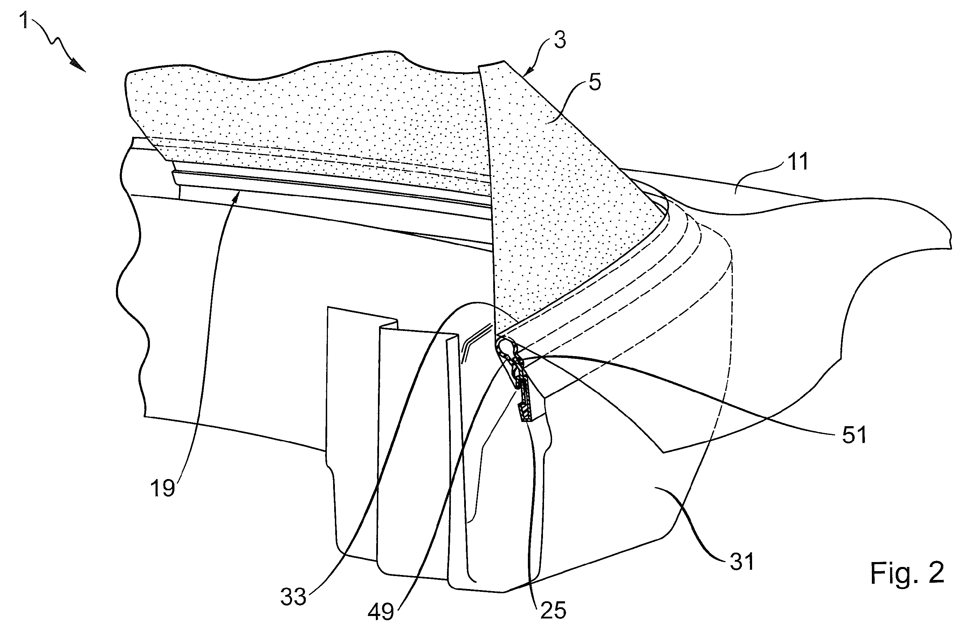

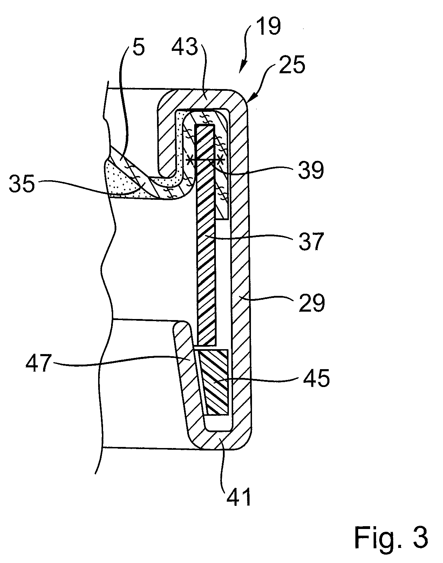

Um den flexiblen Verdeckbezug 5 in seinem heckseitigen Bereich karosseriefest anzubinden, weist das Verdeck 3 einen in Fig. 2 und Fig. 3 näher gezeigten Stoffhaltebügel 19 auf, welcher insgesamt U-förmig mit U-Öffnung in Fahrzeugfrontrichtung ausgebildet ist und sich entlang einer oberen Begrenzung des heckseitigen Stauraums 13 von einer einer linken Fahrzeugseite zugeordneten C-Säule zu einer einer rechten Fahrzeugseite zugeordneten C-Säule 23 erstreckt. Der Stoffhaltebügel 19 ist als Strangprofil in Form eines C-Profils 25 ausgebildet, wobei eine in Erstreckungsrichtung des C-Profils 25 verlaufende schlitzartige Öffnung 27 des Stoffhaltebügels 19 in Richtung Fahrzeuginnenraum weist.

Das C-Profil 25 des Stoffhaltebügels 19 weist eine etwa plane, der Öffnung gegenüberliegende Rückwand 29 auf, mittels welcher das C-Profil auf einfache Weise an einer Fahrzeugkarosserie 31 festgelegt, insbesondere angeschraubt oder angeschweißt, ist.

Wie in Fig. 2 ersichtlich ist, ist das C-Profil 25 des Stoffhaltebügels 19 derart unterhalb einer Fahrzeugaußenhautkante 33 angeordnet, dass das C-Profil 25 von außen nicht sichtbar ist und der Verdeckbezug 5 bei sich in der geschlossenen Position befindlichem Verdeck 3 gegen die Fahrzeugaußenhautkante 33 angedrückt wird.

Insbesondere in Fig. 3 ist auch die Anordnung eines Endbereichs 35 des flexiblen Verdeckbezugs 5 in dem C-Profil 25 des Stoffhaltebügels 19 näher ersichtlich. Der Endbereich 35 ist hierzu mit einem als Leiste 37 ausgebildeten Verstärkungselement verbunden, wobei der Endbereich 35 des Verdeckbezugs 5 hierzu um ein Ende der vorliegend plattenförmigen Leiste 37 geführt und mit dieser durch ein Nähnaht 39 verbunden ist.

Die Leiste 37 ist dabei aus einem flexiblen Material, vorliegend aus Kunststoff, ausgebildet, so dass die Leiste 37 entsprechend dem Verlauf des Stoffhaltebügels 19 gebogen werden kann und auch leichter in das c-Profil eingesetzt werden kann.

Alternativ hierzu kann die Leiste auch in einer dem Verlauf des Stoffhaltebügels nachgebildeten Form gefertigt sein und auch starr ausgebildet sein, um einen besonders sicheren Halt der Leiste 37 in dem C-Profil 25 zu gewährleisten.

Das C-Profil 25 des Stoffhaltebügels 19 weist zwei U-förmige Bereiche 41 und 43 auf, die durch die Rückwand 29 des C-Profils 25 miteinander verbunden sind. Um den Verdeckbezug 5 in dem C-Profil 25 festzulegen, ist der Endbereich 35 des Verdeckbezugs 5 zusammen mit der Leiste 37 durch die Öffnung 27 in das C-Profil 25 des Stoffhaltebügels 19 eingesteckt.

Zur Anordnung des Verdeckbezugs 5 an dem Stoffhaltebügel 19 wird die Leiste 37 insbesondere mit ihrem dem Endbereich 35 des Verdeckbezugs 5 abgewandten Ende quer zur Erstreckungsrichtung des C-Profils 25 durch die schlitzartige Öffnung 27 in den unteren U-förmigen Bereich 41 des C-Profils 25 eingesteckt bis die Leiste 37 den Boden des unteren U-förmigen Bereichs 41 berührt und anschließend mit ihrem oberen, mit dem Endbereich 35 des Verdeckbezugs 5 verbundenen Ende durch die Öffnung 27 in das C-Profil 25 eingeschwenkt, so dass die Leiste 37 lose, d. h. weder in axialer noch tangentialer Richtung fixiert, in dem C-Profil 25 gelagert ist.

Das mit dem Endbereich 35 des Verdeckbezugs 5 verbundene Ende der Leiste 37 wird anschließend in den oberen U-förmigen Bereich 43 des C-Profils 25 gedrückt und mittels eines Sicherungsprofils 45 in dieser Position gesichert. Hierzu wird das Sicherungsprofil 45 in Erstreckungsrichtung des C-Profils 25 von einem Endbereich des C-Profils 25 im Bereich einer C-Säule 21 bzw. 23 unterhalb der Leiste 37 in den zwischen der Leiste 37 und einem unteren Ende des C-Profils 25 vorliegenden Hohlraum eingesteckt.

Das Sicherungsprofil 45 weist vorliegend eine dem C-Profil 25 entsprechende Länge auf, so dass es in Einbauposition im gesamten C-Profil 25 unterhalb der Leiste 37 angeordnet ist.

Die Höhe des Sicherungsprofils 45 ist derart bemessen, dass das Sicherungsprofil 45 die Leiste 37 an einem Herausgleiten aus der Öffnung 27 des C-Profils 25 sicher hindert und das Sicherungsprofil 45 einfach in das C-Profil 25 eingesteckt werden kann.

In geschlossener Verdeckposition wirkt durch den Verdeckbezug 5 eine die Leiste 37 in Richtung des unteren U-förmigen Bereichs 41 drückende Kraft. Bei in dem C-Profil 25 eingesetztem Sicherungsprofil 45 drückt die Leiste 37 auf das Sicherungsprofil 45. Das an die Form des unteren U-förmigen Bereichs 41 angepasste Sicherungsprofil 45 stützt sich dabei an dem unteren U-förmigen Bereich 41 des C-Profils 25 ab und verhindert, dass sich das obere Ende der Leiste 37 aus dem oberen U-förmigen Bereich 43 des C-Profils 25 bewegt, da die Leiste 37 hierbei sowohl mit einem oberen Ende innerhalb des oberen U-förmigen Bereichs 43 als auch mit einem unteren Ende innerhalb des unteren U-förmigen Bereichs 43 des C-Profils 25 angeordnet ist. Die Leiste 37 und somit der Verdeckbezug 5 sind somit sicher durch das Sicherungsprofil 45 in dem C-Profil 25 festgelegt.

Durch Ausführung der beschriebenen Schritte in umgekehrter Reihenfolge kann der Verdeckbezug 5 auf entsprechend einfache Weise von dem Stoffhaltebügel 19 entfernt werden. Hierzu muss zunächst das Sicherungsprofil 45 in Erstreckungsrichtung des C-Profils 25 aus diesem herausgezogen werden.

Um ein Entfernen des Sicherungsprofils 45 aus dem C-Profil 25 zu erleichtern, kann dieses in einem Randbereich ein Griffelement aufweisen, welches beispielsweise durch ein Band oder Seil, welches durch ein in dem Sicherungsprofil 45 vorgesehenes Loch geführt und verknotet sein kann, auf einfache Weise realisiert sein kann.

Anschließend wird die Leiste 37 mit ihrem dem Endbereich 35 des Verdeckbezugs 5 abweisenden Ende in Richtung des unteren U-förmigen Bereichs 43 bewegt, dann mit dem den Endbereich 35 des Verdeckbezugs 5 aufweisenden Ende durch die schlitzartige Öffnung 27 des C-Profils 25 geschwenkt und schließlich vollständig durch die Öffnung 27 des C-Profils 25 geführt.

Sowohl das Festlegen als auch das Lösen des Verdeckbezugs 5 wird insbesondere bei teilweise geöffnetem Verdeck 3 durchgeführt, da dann eine auf den Verdeckbezug 5 wirkende Spannung reduziert ist und der Verdeckbezug 5 einfach manuell in das C-Profil 25 eingeführt oder von diesem gelöst werden kann.

Um ein Einstecken und Lösen des Verdeckbezugs 5 an bzw. von dem Stoffhaltebügel 19 zu erleichtern, weist der untere U-förmige Bereich 41 des C-Profils 25 eine Keilform dergestalt auf, dass eine Vorderwand 47 des unteren U-förmigen Bereichs 41 mit der Rückwand 29 einen spitzen Winkel bildet. Entsprechend weist das Sicherungsprofil 45 eine an die Keilform des unteren U-förmigen Bereichs 41 des C-Profils 25 angepasste Keilform auf.

Um ein Eindringen von Flüssigkeiten, Schmutz oder dergleichen im Bereich des Stoffhaltebügels 19 in einen Fahrzeuginnenraum zu verhindern ist ein in der Fig. 2 ersichtliches Dichtprofil 49 vorgesehen, welches vorliegend auf ein sich von dem oberen U-förmigen Bereich 43 des C-Profils 25 erstreckendes Plattenelement 51 aufgesteckt ist. Das Dichtprofil 49 ist dabei derart an dem C-Profil 25 angeordnet, dass der Verdeckbezug 5 in geschlossener Verdeckposition gegen das Dichtprofil 49 drückt, womit der Fahrzeuginnenraum abgedichtet ist.

Alternativ hierzu kann das Dichtprofil auch an der Fahrzeugkarosserie angeordnet sein.

Eine Montage des vorliegenden Verdecks 3 an das Cabriolet-Fahrzeug 1 ist sehr einfach möglich, da der Stoffhaltebügel 19 bereits mit der Fahrzeugkarosserie 31 gefertigt oder an dieser angeordnet werden kann, wobei der Bereich zur Montage des Stoffhaltebügels 19 an die Fahrzeugkarosserie 31 gegenüber einem späteren Zeitpunkt sehr leicht zugänglich ist. Der Verdeckbezug 5 selbst kann über die Leiste 37 nach einer Befestigung des Stoffhaltebügels 19 an der Fahrzeugkarosserie 31 während oder nach der Montage eines Gestänges des Verdecks 3 durch das einfache Einstecksystem an dem Stoffhaltebügel 19 angeordnet und gelöst werden.

## Patentansprüche

1. Verdeck für ein Cabriolet-Fahrzeug (1) mit einem Verdeckbezug (5) und einem Stoffhaltebügel (19), wobei ein Endbereich (35) des Verdeckbezugs (5) mit einem Verstärkungselement (37) verbunden ist und zusammen mit diesem quer zur Erstreckungsrichtung des Stoffhaltebügels (19) in ein Profil (25) des Stoffhaltebügels (19) eingesteckt ist, wobei das Profil (25) des Stoffhaltebügels (19) mit einer in Erstreckungsrichtung des Stoffhaltebügels (19) verlaufenden Öffnung (27) ausgebildet ist, durch welche der Verdeckbezug (5) mit dem Verstärkungselement (37) lose eingesteckt ist, und wobei das Verstärkungselement (37) als Leiste ausgebildet ist, an welche der Verdeckbezug (5) in einem Endbereich (35) angebunden ist,
**dadurch gekennzeichnet,**
**dass** das Profil (25) des Stoffhaltebügels (19) als C-Profil mit einem ersten U-förmigen Bereich (41) und einem zweiten U-förmigen Bereich (43) ausgebildet ist, wobei die Geometrie des C-Profils (25) und der Leiste (37) derart aufeinander abgestimmt sind, dass die Leiste (37) mit einem Ende in einen U-förmigen Bereich (41) des C-Profils (25) des Stoffhaltebügels (19) einsteckbar und mit dem anderen Ende durch die Öffnung (27) in das C-Profil (25) des Stoffhaltebügels (19) einschwenkbar ist.

2. Verdeck nach Anspruch 1,
**dadurch gekennzeichnet,**
**dass** die Öffnung (27) des Stoffhaltebügels (19) in Verdeckfrontrichtung weist, so dass sich der Verdeckbezug (5) ausgehend von der Öffnung (27) des C-Profils (25) in Verdeckfrontrichtung erstreckt.

3. Verdeck nach einem der Ansprüche 1 oder 2,
**dadurch gekennzeichnet,**
**dass** ein Sicherungsprofil (45) vorgesehen ist, welches in einen U-förmigen Bereich (41 bzw. 43) des C-Profils (25) insbesondere in Erstreckungsrichtung des Stoffhaltebügels (19) derart einschiebbar ist, dass die Leiste (37) gegen den anderen U-förmigen Bereich (43 bzw. 41) des C-Profils (25) gedrückt und entgegen einer Bewegung durch die Öffnung (27) festgelegt ist.

4. Verdeck nach Anspruch 3,
**dadurch gekennzeichnet,**
**dass** das Sicherungsprofil (45) integral mit dem Verstärkungselement (37) ausgebildet ist.

5. Verdeck nach einem der Ansprüche 1 bis 4,
**dadurch gekennzeichnet,**
**dass** das C-Profil (25) des Stoffhaltebügels (19) fest an einer Fahrzeugkarosserie (31) festlegbar ist.

6. Verdeck nach einem der Ansprüche 1 bis 4,
**dadurch gekennzeichnet,**
**dass** der Stoffhaltebügel (19) fest an einem bei einer Verdecköffnungsbewegung bzw. einer Verdeckschließbewegung beweglichen Spannbügel des Verdecks (3) angeordnet ist.

7. Verdeck nach einem der Ansprüche 1 bis 6,
**dadurch gekennzeichnet,**
**dass** der Stoffhaltebügel (19) zumindest bei sich in geschlossener Position befindlichem Verdeck (3) unterhalb einer Karosserieaußenhautkante (33) an der Fahrzeugkarosserie (31) festgelegt ist.

8. Verdeck nach einem der Ansprüche 1 bis 7,
**dadurch gekennzeichnet,**
**dass** ein Dichtprofil (49) vorgesehen ist, mittels welchem der Verdeckbezug (5) bei sich in seiner geschlossenen Position befindlichem Verdeck (3) dichtend zusammenwirkt.

9. Verdeck nach Anspruch 8,
**dadurch gekennzeichnet,**
**dass** das Dichtprofil (45) an dem Stoffhaltebügel (19) angeordnet ist und insbesondere an diesen ansteckbar ist.

10. Verdeck nach Anspruch 8,
**dadurch gekennzeichnet,**
**dass** das Dichtprofil (45) an der Fahrzeugkarosserie (31) anordenbar ist.

11. Verdeck nach einem der Ansprüche 1 bis 10,
**dadurch gekennzeichnet,**
**dass** das Verstärkungselement (37) und/oder das Sicherungsprofil (45) mit Kunststoff ausgebildet sind.

12. Verdeck nach einem der Ansprüche 1 bis 11,
**dadurch gekennzeichnet,**
**dass** der Verdeckbezug (5) an dem Verstärkungselement (37) angenäht oder angeklebt ist.

## Claims

1. A hood for a convertible vehicle (1), said hood comprising a hood cover (5) and a fabric-holding bracket (19), wherein an end region (35) of the hood cover (5) is connected to a reinforcing element (37) and is inserted, together with the latter, into a profile (25) of the fabric-holding bracket (19) in a direction transverse to the direction of extension of the fabric-holding bracket (19), wherein the profile (25) of the fabric-holding bracket (19) is provided with an opening (27), which extends in the direction of extension of the fabric-holding bracket (19) and through which the hood cover (5) is loosely inserted with the reinforcing element (37), and wherein the reinforcing element (37) is provided as a moulding to which the hood cover (5) is connected in an end region (35),
**characterised in that**
the profile (25) of the fabric-holding bracket (19) is provided as a C-profile comprising a first U-shaped region (41) and a second U-shaped region (43), the geometry of the C-profile (25) and of the moulding (37) being adapted to each other such that the moulding (37) can be inserted at one end into a U-shaped region (41) of the C-profile (25) of the fabric-holding bracket (19) and its other end can be swivelled into the C-profile (25) of the fabric-holding bracket (19) through the opening (27).

2. The hood according to claim 1, **characterised in that** the opening (27) of the fabric-holding bracket (19) faces towards the front of the hood, so that the hood cover (5) extends towards the front of the hood from the opening (27) of the C-profile (25).

3. The hood according to any one of claims 1 or 2, **characterised in that** a securing profile (45) is provided which can be slid into a U-shaped region (41 or 43, respectively) of the C-profile (25), in particular in the direction of extension of the fabric-holding bracket (19), such that the moulding (37) is pressed against the other U-shaped region (43 or 41, respectively) of the C-profile (25) and secured against movement through the opening (27).

4. The hood according to claim 3, **characterised in that** the securing profile (45) is formed integrally with the reinforcing element (37).

5. The hood according to any one of claims 1 to 4, **characterised in that** the C-profile (25) of the fabric-holding bracket (19) can be securely fixed to a vehicle body (31).

6. The hood according to any one of claims 1 to 4, **characterised in that** the fabric-holding bracket (19) is fixed to a tensioning bow of the hood (3), which tensioning bow can be moved during a hood opening or closing movement.

7. The hood according to any one of claims 1 to 6, **characterised in that** the fabric-holding bracket (19) is fixed to the vehicle body (31) below a body shell edge (33) at least when the hood (3) is in the closed position.

8. The hood according to any one of claims 1 to 7, **characterised in that** a sealing profile (49) is provided with which the hood cover (5) cooperates in a sealing manner when the hood (3) is in its closed position.

9. The hood according to claim 8, **characterised in that** the sealing profile (45) is arranged on the fabric-holding bracket (19) and, in particular, can be attached to the latter.

10. The hood according to claim 8, **characterised in that** the sealing profile (45) can be arranged on the vehicle body (31).

11. The hood according to any one of claims 1 to 10, **characterised in that** the reinforcing element (37) and/or the securing profile (45) is formed using a plastic material.

12. The hood according to any one of claims 1 to 11, **characterised in that** the hood cover (5) is sewn or glued to the reinforcing element (37).

## Revendications

1. Capote pour un véhicule cabriolet (1), ladite capote comportant un recouvrement de capote (5) et un étrier de retenue de toile (19), une région d'extrémité (35) du recouvrement de capote (5) étant reliée avec un élément de renforcement (37) et étant insérée avec ce dernier dans un profilé (25) de l'étrier de retenue (19) transversalement par rapport à la direction d'extension de l'étrier de retenue (19), le profilé (25) de l'étrier de retenue (19) étant réalisé avec une ouverture (27), qui s'étend dans la direction d'extension de l'étrier de retenue (19) et à travers laquelle le recouvrement de capote (5) est lâchement inséré ensemble avec l'élément de renforcement (37), et l'élément de renforcement (37) étant réalisé sous forme d'une moulure avec laquelle le recouvrement de capote (5) est relié dans une région d'extrémité (35),
ladite capote étant **caractérisée en ce que**
le profilé (25) de l'étrier de retenue (19) est réalisé sous forme d'un profilé en C, comportant une première région en U (41) et une deuxième région en U (43), la géométrie du profilé en C (25) et de la moulure (37) étant adaptées l'une à l'autre de manière à pouvoir insérer l'une des extrémités de la moulure (37) dans la région en U (41) du profilé en C (25) de l'étrier de retenue (19) et de pouvoir pivoter son autre extrémité dans le profilé en C (25) de l'étrier de retenue (19) à travers l'ouverture (27).

2. Capote selon la revendication 1, **caractérisée en ce que** l'ouverture (27) de l'étrier de retenue (19) est orientée vers l'avant de la capote, de sorte que le recouvrement de capote (5) s'étende vers l'avant de la capote à partir de l'ouverture (27) du profilé en C (25).

3. Capote selon l'une quelconque des revendications 1 ou 2, **caractérisée en ce que** l'on prévoit un profilé d'arrêt (45) que l'on peut pousser dans une région en U (41 ou 43, respectivement) du profilé en C (25), notamment dans la direction d'extension de l'étrier de retenue (19), de manière à presser la moulure (37) contre l'autre région en U (43 ou 41, respectivement) du profilé en C (25) et à fixer cette première pour empêcher son mouvement à travers l'ouverture (27).

4. Capote selon la revendication 3, **caractérisée en ce que** le profilé d'arrêt (45) est réalisé intégralement avec l'élément de renforcement (37).

5. Capote selon l'une quelconque des revendications 1 à 4, **caractérisée en ce que** le profilé en C (25) de l'étrier de retenue (19) peut être monté fixe à une carrosserie (31).

6. Capote selon l'une quelconque des revendications 1 à 4, **caractérisée en ce que** l'étrier de retenue (19) est monté fixe à un étrier de tension de la capote (3), ledit étrier de tension étant déplaçable lors d'un mouvement d'ouverture ou de fermeture de la capote.

7. Capote selon l'une quelconque des revendications 1 à 6, **caractérisée en ce que** l'étrier de retenue (19) est monté fixe à la carrosserie (31) au-dessous d'un bord (33) de l'enveloppe extérieure de la carrosserie, au moins lorsque la capote (3) se trouve en position fermée.

8. Capote selon l'une quelconque des revendications 1 à 7, **caractérisée en ce que** l'on prévoit un profilé d'étanchéité (49) avec lequel le recouvrement de capote (5) coopère d'une manière étanche lorsque la capote (3) se trouve dans sa position fermée.

9. Capote selon la revendication 8, **caractérisée en ce que** le profilé d'étanchéité (45) est disposé sur l'étrier de retenue (19) et peut notamment être relié avec ce dernier.

10. Capote selon la revendication 8, **caractérisée en ce que** le profilé d'étanchéité (45) peut être disposé sur la carrosserie (31).

11. Capote selon l'une quelconque des revendications 1 à 10, **caractérisée en ce que** l'élément de renforcement (37) et/ou le profilé d'arrêt (45) est réalisé en utilisant une matière plastique.

12. Capote selon l'une quelconque des revendications 1 à 11, **caractérisée en ce que** le recouvrement de capote (5) est cousu ou collé à l'élément de renforcement (37).
